Europäisches Patentamt

European Patent Office

Office européen des brevets

(19)

(11) **EP 0 846 390 B1**

(12)

# EUROPÄISCHE PATENTSCHRIFT

(45) Veröffentlichungstag und Bekanntmachung des Hinweises auf die Patenterteilung:
**20.01.1999 Patentblatt 1999/03**

(51) Int Cl.6: **H04N 1/60**

(21) Anmeldenummer: **96938912.1**

(22) Anmeldetag: **16.08.1996**

(86) Internationale Anmeldenummer:
**PCT/DE96/01536**

(87) Internationale Veröffentlichungsnummer:
**WO 97/08886 (06.03.1997 Gazette 1997/11)**

(54) **VERFAHREN UND EINRICHTUNG ZUR UMWANDLUNG VON FARBWERTEN**

METHOD AND DEVICE FOR CONVERTING COLORIMETRIC VALUES

PROCEDE ET DISPOSITIF DE CONVERSION DES VALEURS COLORIMETRIQUES

(84) Benannte Vertragsstaaten:
**DE FR GB IT**

(30) Priorität: **26.08.1995 DE 19531390**

(43) Veröffentlichungstag der Anmeldung:
**10.06.1998 Patentblatt 1998/24**

(73) Patentinhaber: **Heidelberger Druckmaschinen Aktiengesellschaft
69115 Heidelberg (DE)**

(72) Erfinder: **BESTMANN, Günter
D-24161 Altenholz (DE)**

(56) Entgegenhaltungen:
**DE-A- 3 729 188** **GB-A- 2 191 655**

- **PATENT ABSTRACTS OF JAPAN vol. 12, no. 254 (E-634), 16. Juli 1988 & JP 63 040492 A (CANON), 20. Februar 1988,**

**Beschreibung**

Die Erfindung bezieht sich auf das Gebiet der elektronischen Reproduktionstechnik und betrifft ein Verfahren und eine Einrichtung zur Umwandlung von Farbwerten eines Farbnegativs mittels einer Negativ/Positiv-Umkehrfunktion bei der optoelektronischen Abtastung von Farbnegativen in Geräten und Systemen für die elektronische Bildbearbeitung.

Die elektronische Bildverarbeitung besteht im wesentlichen aus den Schritten Bildeingabe, Bildbearbeitung und Bildausgabe.

Bei der Bildeingabe z.B. mittels eines Farbbildabtasters (Scanners) werden durch trichromatische sowie bildpunkt- und zeilenweise optoelektronische Abtastung einer zu reproduzierenden Farbvorlage drei analoge Farbwertsignale (R, G, B) gewonnen, wobei jedes Farbwert-Tripel (R, G, B) die Farbanteile "Rot" (R), "Grün (G) und "Blau" (B) eines in der Farbvorlage abgetasteten Bildpunktes repräsentiert. Die analogen Farbwertsignale werden in digitale Farbwerte umgewandelt und für die anschließende Bildbearbeitung gespeichert.

Bei der Bildbearbeitung werden die Farbwerte (R, G, B) meistens zunächst nach den Gesetzmäßigkeiten der subtraktiven Farbmischung in Farbauszugswerte (C, M, Y, K) umgesetzt, welche ein Maß für die Dosierung der im späteren Druckprozeß verwendeten Druckfarben "Cyan" (C), "Magenta" (M), "Gelb" (Y) und "Schwarz" (K) bzw. für die Rasterprozente sind. Gleichzeitig können bei der Bildbearbeitung noch lokale oder selektive Farbkorrekturen unter Sichtkontrolle auf einem Farbmonitor mit dem Ziel durchgeführt, die Farbildwiedergabe zu verbessern oder redaktionelle Farbänderungen vorzunehmen.

Nach der Bildbearbeitung erfolgt die Bildausgabe mittels eines geeigneten Bildausgabegerätes, z.B. eines Belichters oder Recorders, durch punkt- und zeilenweise Belichtung des zu reproduzierenden Farbbildes auf einem Aufzeichnungsmaterial, von denen dann die Druckformen für den Mehrfarbendruck des Farbbildes hergestellt werden.

Die abzutastenden Farbvorlagen sind in der Regel Farbumkehrfilme (Dias) oder Farbnegative. Ein Farbumkehrfilm läßt sich nach der Entwicklung direkt betrachten, da er ein farbrichtiges Bild des Originals liefert. Für die Farbbildbeurteilung eines Farbumkehrfilmes auf einem Farbmonitor können daher die bei der Abtastung des Farbumkehrfilmes erzeugten Farbwerte ($R_p$, $G_p$, $B_p$) direkt oder nach einer Farbkorrektur zur Ansteuerung des Farbmonitors verwendet werden. Ein Farbnegativ liefert dagegen nach der Entwicklung kein farbrichtiges Bild des Originals. Erst nach der Umkopierung des Farbnegativs auf ein spezielles Positivpapier ist eine farbrichtige Betrachtung des fotografierten Objektes möglich. Für die Farbbildbeurteilung eines Farbnegativs auf einem Farbmonitor ist daher zunächst eine Negativ/Positiv-Umkehrfunktion zu ermitteln und dann müssen die bei der Abtastung des Farbnegativs gewonnenen Farbwerte ($R_n$, $G_n$, $B_n$) anhand der ermittelten Negativ/Positiv-Umkehrfunktion ($R_p$, $G_p$, $B_p$) = f ($R_n$, $G_n$, $B_n$) in die das entsprechende Positivbild repräsentierenden Farbwerte ($R_p$, $G_p$, $B_p$) zur Ansteuerung des Farbmonitors umgesetzt werden.

Aus der Druckschrift H. Lang; "Farbmetrik und Farbfernsehen"; R. Oldenbourg Verlag München Wien; 1978; ISBN 3-486-20661-3; Kapitel 23 "Elektronische Farbumkehr und Farbkorrektur"; Seiten 414 bis 427, ist bereits ein Verfahren zur Ermittlung einer Negativ/Positiv-Umkehrfunktion für Farbnegative bekannt.

Ein Farbnegativfilm weist drei einzelne Filmschichten auf, nämlich eine blauempfindliche Gelbschicht, eine grünempfindliche Magentaschicht und eine rotempfindliche Cyanschicht. Jede Filmschicht ist durch eine Farbdichtekurve $D_r = f (E_r)$, $D_g = f (E_g)$ und $D_b = f (E_b)$ gekennzeichnet, welche den Zusammenhang zwischen den auf den Farbnegativfilm einwirkenden Lichtmengen ($E_r$, $E_g$, $E_b$) und den jeweils in den einzelnen Filmschichten erreichten Farbdichten ($D_r$, $D_g$, $D_b$) angeben. Bei einem Farbnegativfilm besteht in einem weiten Bereich ein linearer Zusammenhang zwischen der einwirkenden Lichtmengen ($E_r$, $E_g$, $E_b$) und den nach der Entwicklung des Films erreichten Dichten ($D_r$, $D_g$, $D_b$), da die Steigungen ($\gamma_n$) der Filmdichtekurven, d.h. die Gradation, im nutzbaren Wertebereich nahezu linear sind. Die Steigungen ($\gamma_n$) sind außerdem positiv, so daß eine große Lichtmenge einer großen Dichte in der Filmschicht und damit einem geringen Transmissionsgrad entspricht. Aufgrund der Farbmaskierung des Farbnegativfilms, mit der die durch die Nebenfarbdichten in den Filmschichten verursachten Farbverfälschungen korrigiert werden, liegen die drei Farbdichtekurven $D_r = f (E_r)$, $D_g = f (E_g)$ und $D_b = f (E_b)$ nicht übereinander, so daß die Dichtewerte ($D_r$, $D_g$, $D_b$) jeweils einen Offsetwert ($\beta_r$, $\beta_g$, $\beta_b$) aufweisen, wodurch beispielsweise bei der Belichtung eines Grauwertes drei unterschiedliche Farbdichtewerte ($D_r$, $D_g$, $D_b$) entstehen.

Bei dem bekannten Verfahren zur Umsetzung von Farbwerten eines Farbnegativs nach einer Negativ/Positiv-Umkehrfunktion ($R_p$, $G_p$, $B_p$) = f ($R_n$, $G_n$, $B_n$) werden die beispielsweise durch optoelektronische Abtastung mittels eines Farbabtasters gewonnenen Farbwerte ($R_n$, $G_n$, $B_n$) zunächst logarithmiert, um einen Verstärkungsfaktor ($\alpha_r$, $\alpha_g$, $\alpha_b$) verstärkt, dann mit den erläuterten Parametern ($\gamma_n$, $\beta_r$, $\beta_g$, $\beta_b$) der Farbdichtekurven invertiert und anschließend wieder entlogarithmiert, um die Farbwerte ($R_p$, $G_p$, $B_p$) zu erhalten. Diese Umwandlungsschritte erfolgen zusammengefaßt nach folgenden näherungsweisen Beziehungen:

$$R_p = \alpha_r * R_n^{-\gamma_n} + \beta_r$$

$$G_p = \alpha_g * G_n^{-\gamma_n} + \beta_g$$

$$B_p = \alpha_b * B_n^{-\gamma_n} + \beta_b$$

Diese Beziehungen werden bei der bekannten Vorgehensweise durch einfache elektrische Schaltungen realisiert. Die Parameter ($\alpha$, $\beta$, $\gamma$) der Farbdichtekurven werden dabei durch manuell betätigbare Regler verändert, wobei die Offsetwerte ($\beta$) oft vernachlässigt und die Steigungen ($\gamma$) der Farbdichtekurven für alle drei Farbanteile gleich vorgegeben werden. Dadurch wird die Farbumkehr letztlich nur über die Verstärkungsfaktoren ($\alpha$) gesteuert, wobei die Verstärkungsfaktoren ($\alpha$) häufig interaktiv am Farbmonitor oder durch Lichtmessung in einer Vorlagen bestimmt werden.

In der GB-A-2191655 wird bereits ein Verfahren zur Umwandlung von Farbwerten eines Farbnegativs beschrieben, bei dem analoge Farbwerte (R,G,B) zunächst in Farbdichtesignale logarithmiert, in Farbdichtedaten digitalisiert und zwischengespeichert werden. Nach der Zwischenspeicherung werden die Farbdichtedaten dann mittels einer ersten Look-Up-Table (LUT) farbkorrigiert und anschließend nach einer in einer zweiten Look-Up-Table gespeicherten Negativ/Positiv-Umkehrfunktion modifiziert. Die modifizierten Farbdichtedaten werden in analoge Farbdichtewerte umgewandelt und auf einem Farbmonitor dargestellt. Die Gewinnung einer Negativ/Positiv-Umkehrfunktion anhand des Bildlichtwertes und des Bildtiefewertes eines Farbnegativs, die durch eine Bildanalyse der Farbnegativs ermittelt werden, sowie anhand von berechneten und definierten Dichtebereichen des Farbnegativs, ist nicht offenbart.

Die JP-A-6304092 betrifft eine Farbbildbearbeitungseinrichtung, in der aus den Farbsignalen (R,G,B) der Bildlichtwert und der Bildtiefewert eines Farbbildes ermittelt werden, um daraus eine optimalen Gradationskonvertierungskurve zu gewinnen. Die Gewinnung einer Negativ/Positiv-Umkehrfunktion anhand des Bildlichtwertes und des Bildtieferwertes eines Farbnegativs, die durch eine Bildanalyse der Farbnegativs ermittelt werden, sowie anhand von berechneten und definierten Dichtebereichen des Farbnegativs, ist nicht offenbart.

In der DE-A-3729188 wird ein Farbfilminspektionsgerät zur Darstellung von Farbbildern auf einem Farbmonitor angegeben, bei dem Farbdichtedaten gewonnen, die Farbdichtedaten einer Farb-und Gradationskorrektur unterzogen und die korrigierten Farbdichtewerte einen Farbmonitor zugeführt werden. Die Zusammenhänge zwischen Bildlichtwerten, Bildtiefewerten, Dichtebereichen und einer daraus resultierenden Negativ/Positiv-Umkehrfunktion sind nicht offenbart.

Die herkömmlichen Verfahren zur Umsetzung der Farbwerte von Farbnegativen nach einer Negativ/Positiv-Umkehrfunktion und zur Ermittlung der Negativ/Positiv-Umkehrfunktion basieren im wesentlichen auf manuellen Einstellungen von Farbwerten mit vereinfachten Parametern, so daß keine optimale Farbwert-Umsetzung und damit Reproduktionsqualität erreicht wird. Die Ergebnisse bei der Farbwert-Umsetzung lassen sich zwar durch nachträgliche Farbkorrekturen, beispielsweise durch eine Farbstich-Korrektur oder eine Gradations-Korrektur, bei der anschliessenden Bildbearbeitung verbessern, diese Vorgehensweise ist aber aufwendig.

Der Erfindung liegt daher die Aufgabe zugrunde, ein Verfahren und eine Einrichtung zur Umsetzung der Farbwerte von Farbnegativen mittels einer Negativ/ Positiv-Umkehrfunktion derart zu verbessern, daß zwecks Erzielung einer guten Reproduktionsqualität eine hohe Genauigkeit bei der Farbumkehr erreicht wird und daß das Verfahren automatisch abläuft, um den Operator von routinemäßigen manuellen Arbeiten zu entlasten.

Diese Aufgabe wird bezüglich des Verfahrens durch die Merkmale des Anspruchs 1 und bezüglich der Einrichtung durch die Merkmale des Anspruchs 14 gelöst.

Vorteilhafte Ausgestaltungen und Weiterbildungen sind in den Unteransprüchen angegeben.

Die Erfindung wird nachfolgend anhand der Figuren 1 bis 6 näher erläutert.

Es zeigen:

Fig. 1     ein prinzipielles Blockschaltbild einer Einrichtung zur Ermittlung einer Negativ/Positiv-Umkehrfunktion,

Fig. 2     Diagramme zur Normierung und Farbmaskenkorrektur,

Fig. 3     eine normierte Farbdichtekurve eines Farbnegativs,

Fig. 4     ein weiteres Diagramm zur Umfangsanpassung,

Fig. 5     ein prinzipielles Blockschaltbild einer Einrichtung zur Farbwert-Umsetzung für Farbnegative und

Fig. 6     ein weiteres prinzipielles Blockschaltbild einer Einrichtung zur Farbwert-Umsetzung für Farbnegative.

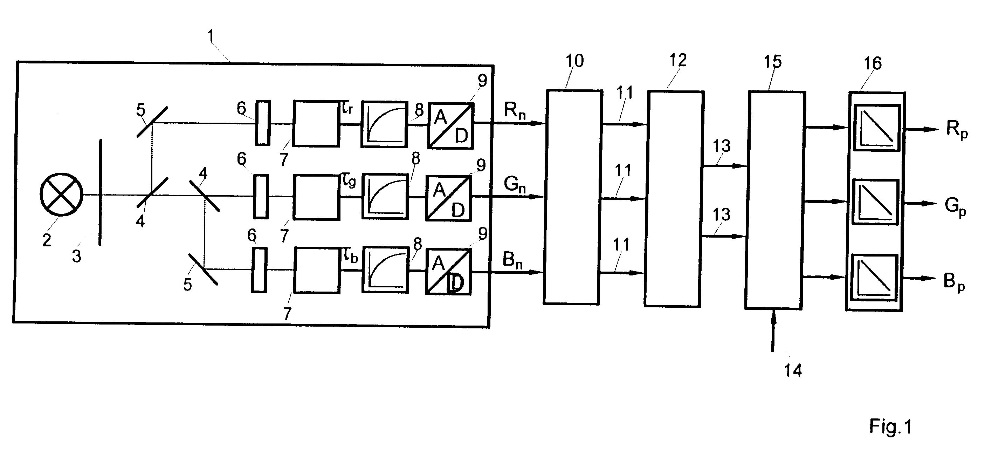

Fig. 1 zeigt ein prinzipielles Blockschaltbild einer Einrichtung zur Ermittlung einer Negativ/Positiv-Umkehrfunktion

$(R_p, G_p, B_p) = f(R_n, G_n, B_n)$ zur Umsetzung der Farbwerte $(R_n, G_n, B_n)$ von Farbnegativen. Die Einrichtung weist einen Farbabtaster (1), auch Farbscanner genannt, zur punkt- und zeilenweisen trichromatischen Abtastung von Farbnegativen auf. Eine Lichtquelle (2) beleuchtet ein Farbnegativ (3) punkt- und zeilenweise durch eine Relativbewegung zwischen Lichtquelle (2) und Farbnegativ (3). Das von dem transparenten Farbnegativ (3) durchgelassene und mit dem Bildinhalt des Farbnegativs (3) modulierte Abtastlicht wird mittels eines Strahlteilerblocks, der aus zwei dichroitischen Spiegeln (4) und zwei Planspiegeln (5) besteht, und mittels drei Farbfilter (6) in drei Teilstrahlen unterschiedlicher spektraler Zusammensetzung zerlegt und drei separaten Farbkanälen zugeführt. Die unterschiedlichen Farbanteile "Rot" (R), "Grün" (G) und "Blau" (B) der drei Teilstrahlen werden in den drei Farbkanälen durch optoelektronische Wandler (7) in für das abgetastete Farbnegativ (3) repräsentative analoge Transmissionswerte $(\tau_r, \tau_g, \tau_b)$ umgewandelt. Der Dynamikbereich der Transmissionswerte $(\tau_r, \tau_g, \tau_b)$ beträgt etwa 1 bis 2 Zehnerpotenzen. Durch eine an das visuelle Helligkeitsempfinden angepaßte Signalvorverzerrung läßt sich der Dynamikbereich bei Bedarf an die in der digitalen Bildverarbeitung übliche Signalauflösung von beispielsweise 8 Bit anpassen. Dazu werden die Transmissionswerte $(\tau_r, \tau_g, \tau_b)$ in Vorverzerrungs-Stufen (8) entsprechend den Beziehungen $R_n = f(\tau_r)$, $G_n = f(\tau_g)$ und $B_n = f(\tau_b)$ in die Farbwerte $(R_n, G_n, B_n)$ umgewandelt. Findet keine Vorverzerrung statt, sind $R_n = \tau_r$, $G_n = \tau_g$ und $B_n = \tau_b$. Die Farbwerte $(R_n, G_n, B_n)$ werden dann in A/D-Wandlern (9) in digitale Farbwerte $(R_n, G_n, B_n)$ umgewandelt, die dann in einem Bilddaten-Speicher (10) eines Bildbearbeitungs-Systems für die anschließende Bildbearbeitung zwischengespeichert werden. Die Digitalisierung in den A/D-Wandlern (9) wird dabei derart vorgenommen, daß der digitale Farbwert 0 dem "absoluten Schwarz" (Transmissionswert $\tau = 0.0$) und der digitale Farbwert 255 dem "Referenzweiß" (Transmissionswert $\tau = 1.0$) entspricht.

Die in dem Farbabtaster (1) erzeugten und in dem Bilddaten-Speicher (10) zwischengespeicherten Farbwerte $(R_n, G_n, B_n)$ werden über Leitungen (11) einer Bildanalyse-Einheit (12) zugeführt. In der Bildanalyse-Einheit (12) wird für jeden Farbkanal getrennt anhand der Farbwerte $(R_n, G_n, B_n)$ des jeweils abgetasteten Farbnegativs (3) eine automatische Bildanalyse zur Ermittlung der maximalen Helligkeitswerte, der Bildlichtwerte $(BL_r, BL_g, BL_b)$, und der minimalen Helligkeitswerte, der Bildtiefewerte $(BT_r, BT_g, BT_b)$, des Farbnegativs (3) durchgeführt. Die Abstände zwischen den Bildlichtwerten $(BL_r, BL_g, BL_b)$ und den Bildtiefewerten $(BT_r, BT_g, BT_b)$ legen die jeweiligen Dichtebereiche $\Delta D_r = (BL_r - BT_r)$, $\Delta D_g = (BL_g - BT_g)$ und $\Delta D_b = (BL_b - BT_b)$ der drei Farbanteile "Rot", "Grün" und "Blau" des Farbnegativs (3) fest.

Die durch die Bildanalyse ermittelten Bildlichtwerte $(BL_r, BL_g, BL_b)$ und Bildtiefewerte $(BT_r, BT_g, BT_b)$ sowie vorgebbare Dichtewerte $(D^L, D^T)$ für Bildlicht und Bildtiefe, welche einen normierten Dichtebereich $\Delta D' = (D^L - D^T)$ definieren, werden über Leitungen (13, 14) einer Rechen-Stufe (15) zugeführt, in der die Parameter der Negativ/Positiv-Umkehrfunktion $(R_p, G_p, B_p) = f(R_n, G_n, B_n)$ unter Berücksichtigung der Bildlichtwerte $(BL_r, BL_g, BL_b)$, der Bildtiefewerte $(BT_r, BT_g, BT_b)$, und der vorgegebenen Dichtewerte $(D^L, D^T)$ für Bildlicht und Bildtiefe berechnet werden. Die für einen möglichen Wertebereich der Eingangs-Farbwerte $(R_n, G_n, B_n)$ nach der Negativ/Positiv-Umkehrfunktion $(R_p, G_p, B_p) = f(R_n, G_n, B_n)$ ermittelten Ausgangs-Farbwerte $(R_p, G_p, B_p)$ werden dann durch die funktionsmäßig zugehörigen Eingangs-Farbwerte $(R_n, G_n, B_n)$ adressierbar als Wertetabelle in einem Tabellen-Speicher (16), auch LUT = Look-Up-Table genannt, zur weiteren Verwendung abgelegt.

Nachfolgend wird das Verfahren zur Umsetzung der Farbwerte eines Farbnegativs (3) und zur Ermittlung der dazu benötigten Negativ/Positiv-Umkehrfunktion $(R_p, G_p, B_p) = f(R_n, G_n, B_n)$ anhand der Figuren näher erläutert.

In einem ersten Verfahrensschritt [**A**] wird das zu reproduzierende Farbnegativ (3) punkt- und zeilenweise sowie trichromatisch in dem Farbabtaster (1) nach Fig. 1 abgetastet, und die dabei gewonnenen Farbwerte $(R_n, G_n, B_n)$ werden in dem Bilddaten-Speicher (10) abgelegt.

In einem zweiten Verfahrenschritt [**B**] wird in der Bildanalyse-Einheit (12) für die drei Farbanteile bzw. Farbkanäle getrennt eine Bildanalyse des Farbnegativs (3) zur Ermittlung des jeweiligen hellsten Farbwertes, dem Bildlichtwert $(BL_r, BL_g$ bzw. $BL_b)$ und des jeweiligen dunkelsten Farbwertes, dem Bildtiefewert $(BT_r, BT_g$ bzw. $BT_b)$ durchgeführt.

Die Ermittlung der Bildlichtwerte $(BL_r, BL_g, BL_b)$ und der Bildtiefewerte $(BT_r, BT_g, BT_b)$ kann nach einem der bekannten Verfahren zur automatischen Bildanalyse, vorzugsweise aber nach dem in der DE-C-43 09 879 angegebenen Verfahren zur Ermittlung des Bildumfanges, d.h. des Abstandes zwischen dem Bildlichtwert $(L_{max})$ und dem Bildtiefewert $(L_{min})$, eines Bildes durchgeführt werden.

Bei dem in der DE-C-43 09 879 beschriebenen Verfahren werden die Farbwerte (R, G, B) des RGB-Farbraumes in entsprechende Farbwerte (L, a, b) des LAB-Farbraumes transformiert und die Ermittlung der Bildlichtwerte $(L_{max})$ und der Bildtiefewerte $(L_{min})$ mit den transformierten Helligkeitswerten (L) durchgeführt, indem zunächst die Häufigkeits-Verteilung H (L) der Helligkeitswerte (L) als Helligkeits-Histogramm ermittelt wird und dann in dem Helligkeits-Histogramm H (L) die Grenzen eines möglichen Bildlicht-Bereiches, in dem der Bildlichtwert $(L_{max})$ liegen soll, und die Grenzen eines möglichen Bildtiefe-Bereiches, in dem der Bildtiefewert $(L_{min})$ liegen soll, durch charakteristische Helligkeitswerte (Kontrollpunkte) bestimmt werden. Dann werden der Bildlichtwert $(L_{max})$ aus dem Verlauf des Helligkeits-Histogramms H (L) innerhalb eines erweiterten Helligkeitsbereiches um den Bildlicht-Bereich und der Bildtiefewert $(L_{min})$ aus dem Verlauf des Helligkeits-Histogramms H (L) innerhalb eines erweiterten Helligkeitsbereiches um den Bildtiefe-Bereich berechnet. Dieses Bildanalyse-Verfahren hat insbesondere den Vorteil, daß Artefakten wie Detailkontrastkonturen, Staubkörner, Randbereiche u.s.w. im Farbnegativ berücksichtigt werden, wodurch die Ermittlung der Bildlicht- und Bildtiefewerte mit hoher Genauigkeit erfolgt.

Bei Anwendung des aus der DE-C 43 09 879 bekannten Bildanalyse-Verfahrens auf ein Farbnegativ (3) werden anstelle des Helligkeitswertes (L) nacheinander die Farbwerte ($R_n$, $G_n$, $B_n$) des entsprechenden Farbnegativs (3) analysiert, wobei darauf zu achten ist, daß der hellste Farbwert im Farbnegativ (3) dem dunkelsten Farbwert im Original und der dunkelste Farbwert im Farbnegativ (3) dem hellsten Farbwert im Original entspricht.

Zur Durchführung der Bildanalyse werden in der Regel nicht alle für die Reproduktion eines Farbnegativs (3) erforderlichen Farbdaten benötigt, sondern es genügt, eine geringere Anzahl von Farbdaten des Farbnegativs (3), sogenannte Grobbilddaten, zu verwenden. Zur Gewinnung der Grobbilddaten für die Bildanalyse von beispielsweise 512 x 512 Bildpunkten des Farbnegativs, wird das Farbnegativ (3) in dem Farbabtaster (1) mit einer gröberen Auflösung (Grobscan) abgetastet als die für die Reproduktion erforderliche Auflösung (Feinscan) und die so gewonnenen Grobbilddaten in dem Bilddaten-Speicher (10) abgelegt. Um einen zusätzlichen Grobscan zu vermeiden können die für die Bildanalyse benötigten Grobbilddaten auch aus den durch einen Feinscan des Farbnegativs (3) erzeugten und in dem Bilddaten-Speicher (10) abgelegten Feinbilddaten errechnet werden.

Alternativ zur automatischen Bildanalyse können die Bildlichtwerte ($BL_r$, $BL_g$, $BL_b$) und die Bildtiefewerte ($BT_r$, $BT_g$, $BT_b$) auch dadurch ermittelt werden, daß das Farbnegativ (3) auf einem Farbmonitor dargestellt, die hellste und die dunkelste Bildstelle markiert und die zugehörigen Farbwerte ausgemessen werden.

In einem dritten Verfahrensschritt [**C**] werden in der Rechen-Stufe (15) die Parameter der Negativ/Positiv-Umkehrfunktion ($R_p$, $G_p$, $B_p$) = f ($R_n$, $G_n$, $B_n$) unter Berücksichtigung der im Verfahrensschritt [**B**] ermittelten Bildlichtwerte ($BL_r$, $BL_g$, $BL_b$) und Bildtiefewerte ($BT_r$, $BT_g$, $BT_b$) sowie der vorgegebenen Dichtewerte ($D^L$, $D^T$) für Bildlicht und Bildtiefe ermittelt und anschließend für den möglichen Wertebereich der Eingangs-Farbwerte ($R_n$, $G_n$, $B_n$) die funktionsmäßig zugeordneten Ausgangs-Farbwerte ($R_p$, $G_p$, $B_p$) berechnet. Der Verfahrensschritt [**C**] läuft in folgenden einzelnen Schritten ab.

In einem Schritt [**C1**] werden zunächst die Dichtewerte ($D_r$, $D_g$, $D_b$) durch Logarithmierung der bei der Abtastung des Farbnegativs (3) in dem Farbabtaster (1) gewonnenen Transmissionswerten ($\tau_r$, $\tau_g$, $\tau_b$) nach den Gleichungen [1] berechnet.

$$D_r = - \log \tau_r$$
$$D_g = - \log \tau_g \qquad [1]$$
$$D_b = - \log \tau_b$$

Dabei sind die Transmissionswerte ($\tau_r$, $\tau_g$, $\tau_b$) entsprechend den Beziehungen $\tau_r = R_n/R_{max}$, $\tau_g = G_n/G_{max}$ und $\tau_b = B_n/B_{max}$ mit $R_{max} = G_{max} = B_{max} = 255$ bei einer Auflösung von 8 Bit derart normiert, daß die Transmissionswerte $\tau_r = \tau_g = \tau_b = 0.0$ bei den Farbwerten $R_n = G_n = B_n = 0$ und $\tau_r = \tau_g = \tau_b = 1.0$ bei den Farbwerten $R_n = G_n = Bn = 255$ sind.

Für den Fall, daß die Farbwerte ($R_n$, $G_n$, $B_n$) in den Vorverzerrungs-Stufen (8) des Farbabtasters (1) in Fig. 1 vorverzerrt wurden, muß die Vorverzerrung vor der Weiterverarbeitung der Farbwerte gemäß den Beziehungen $\tau_r = f^{-1}$ ($R_n$), $\tau_g = f^{-1}$ ($G_n$) und $\tau_b = f^{-1}$ ($B_n$) rückgängig gemacht werden. Fand zuvor keine Vorverzerrung statt, sind $\tau_r = R_n$, $\tau_g = Gn$ und $\tau_b = B_n$.

In einem Schritt [**C2**] werden die durch die Bildanalyse ermittelten drei unterschiedlichen Dichtebereiche $\Delta D_r = (BL_r - BT_r)$, $\Delta D_g = (BL_g - BT_g)$ und $\Delta D_b = (BL_b - BT_b)$ der Farbanteile "Rot", "Grün", und "Blau" des Farbnegativs (3) an den festgelegten, normierten Dichtebereich $\Delta D' = (D^L - D^T)$ durch Normierungsfunktionen der Form $D' = f (D)$ umfangsmäßig angepaßt, wobei beispielsweise $D^L = 1.2$ und $D^T = 0.4$ gewählt werden kann. Diese Umfangsanpassung läuft wie folgt ab.

Für die Umfangsanpassung gilt allgemein die Gleichung [2]:

$$(D'-D^T)/(D^L-D^T)=(D-BT)/(BL-BT) \qquad [2]$$

Die allgemeine Gleichung (2) nach D' aufgelöst ergibt für die Farbanteile "Rot", "Grün" und "Blau" die Dichtewerte $D'_r$, $D'_g$ und $D'_b$ in dem normierten Dichtebereich $\Delta D'$ nach den Gleichungen [3]:

$$D'_r = ( D^L - D^T ) / ( BL_r - BT_r ) \cdot ( D_r - BT_r ) + D^T$$

$$D'_g = ( D^L - D^T ) / ( BL_g - BT_g ) \cdot ( D_g - BT_g ) + D^T \qquad [3]$$

$$D'_b = ( D^L - D^T ) / ( BL_b - BT_b ) \cdot ( D_b - BT_b ) + D^T$$

Durch die zuvor beschriebene Umfangsanpassung der einzelnen Dichtebereiche $\Delta D_r$, $\Delta D_g$ und $\Delta D_b$ der Farbanteile "Rot", "Grün" und "Blau" des Farbnegativs (3) an den normierten Dichtebereich ($\Delta D'$) werden die drei Farbdichtekurven $D_r = f (E_r)$, $D_g = f (E_g)$ und $D_b = f (E_b)$ der drei Farbschichten des Farbnegativs (3) zu einer einzigen Farbdichtekurve der allgemeinen Form $D' = f (D)$ zusammengefaßt.

In der Beschreibungseinleitung wurde erläutert, daß die drei Farbdichtekurven $D_r = f (E_r)$, $D_g = f (E_g)$ und $D_b = f (E_b)$ aufgrund der Farbmaskierung des Farbnegativfilms, mit der die durch die Nebenfarbdichten in den Filmschichten verursachten Farbverfälschungen korrigiert werden, nicht übereinander liegen, sondern einen Offset aufweisen. Durch die oben beschriebene Umfangsanpassung fallen die drei Farbdichtekurven zusammen, was einer Eliminierung des Offsets und damit einer Herausfilterung der Farbmaskierung des Farbnegativs entspricht.

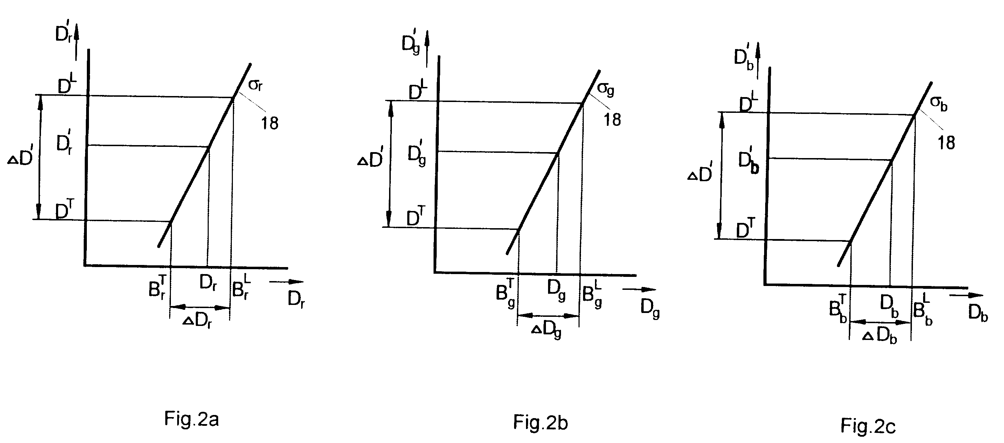

Die Umfangsanpassung ist in Fig. 2a, 2b und 2c für die drei Farbanteile "Rot", "Grün" und "Blau" dargestellt, wobei auf den Abzissen die Dichtewerte $D_r$, $D_g$ und $D_b$ des Farbnegativs (3) und auf den Ordinaten die normierten Dichtewerte $D'_r$, $D'_g$ und $D'_b$ aufgetragen und die Steigungen der Normierungsgeraden (18) mit $\sigma_r$, $\sigma_g$ und $\sigma_b$ bezeichnet sind.

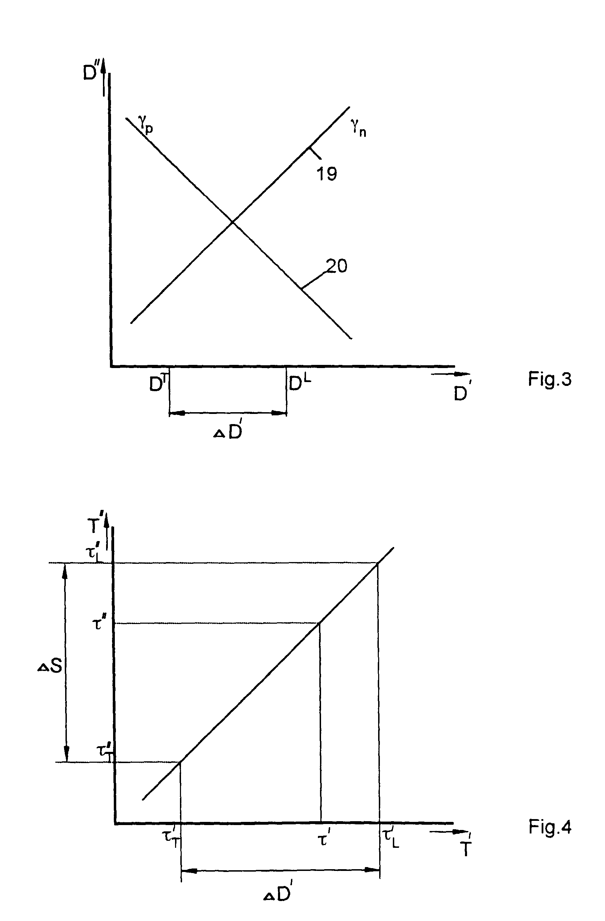

Fig. 3 zeigt die "normierte" Farbdichtekurve eines Farbnegativs (3), die zumindest in dem normierten Dichtebereich ($\Delta D'$) eine Gerade (19) mit der Steigung ($\gamma_n$) ist. Gleichzeitig ist die "inverse normierte" Farbdichtekurve als Gerade (20) mit der Steigung ($\gamma_p$) dargestellt, die der Farbdichtekurve des Positivmaterials entspricht, auf das das Farbnegativ umkopiert werden muß, um ein farbrichtiges Bild zu erhalten. Zwischen der Steigung ($\gamma_n$) der "normierten" Farbdichtekuve des Farbnegativs (3) und der Steigung ($\gamma_p$) der "inversen normierten" Farbdichtekurve des Positivmaterials besteht der Zusammenhang $\gamma_n * \gamma_p = 1$ bzw. $\gamma_p = 1/\gamma_n$ mit z.B. $\gamma_p = 1.4$.

In einem Schritt [C3] erfolgt eine Farbumkehr bei gleichzeitiger Gradationsanpassung, indem die Dichtewerte ($D'_r$, $D'_g$, $D'_b$) des Farbnegativs (3) anhand der "normierten" Farbdichtekurve nach Fig. 3 in entsprechende inverse Dichtewerte ($D''_r$, $D''_g$, $D''_b$) des Farbpositivs mit $\gamma_p = 1/\gamma_n$ gemäß Gleichungen [4] umgerechnet werden.

$$D''_r = - \gamma_p \cdot ( D'_r - D^L) + D^T$$

$$D''_g = - \gamma_p \cdot ( D'_g - D^L) + D^T \qquad [4]$$

$$D''_b = - \gamma_p \cdot ( D'_b - D^L) + D^T$$

In einem weiteren Schritt [C4] erfolgt die Berechnung der Transmissionswerte ($\tau'_r$, $\tau'_g$, $\tau'_b$) aus den im vorangegangenen Schritt ermittelten Dichtewerten ($D''_r$, $D''_g$, $D''_b$) nach Gleichungen [5], was einer Entlogarithmierung entspricht.

$$\tau'_r = 10^{-D''_r}$$

$$\tau'_g = 10^{-D''_g} \qquad [5]$$

$$\tau'_b = 10^{-D''_b}$$

Die in den Schritten [C1] bis [C4] ermittelten Werte werden in zweckmäßiger Weise zu einer neuen Negativ/Positiv-Umkehrfunktion der allgemeinen Form $\tau' = f (\tau)$ zusammengefaßt. Für die einzelnen Farbanteile "Rot", "Grün" und "Blau" gelten die Gleichungen [6]:

$$\tau'_r = k_r * \tau_r^{-\sigma_r \gamma_p}$$
$$\tau'_g = k_g * \tau_g^{-\sigma_g \gamma_p} \qquad [6]$$
$$\tau'_b = k_b * \tau_b^{-\sigma_b \gamma_p}$$

mit folgenden Abkürzungen
für den Farbanteil"Rot" :

$$\sigma_r = (D^L - D^T)/(BL_r - BT_r)$$

$$k_r = 10 - \{\gamma_p * (\sigma_r * BT_r + D^L - D^T) - D^T\}$$

für den Farbanteil "Grün" :

$$\sigma_g = (D^L - D^T) / (BL_g - BT_g)$$

$$k_g = 10 - \{\gamma_p * (\sigma_g * BT_g + D^L - D^T) - D^T\}$$

und für den Farbanteil "Blau" :

$$\sigma_b = (D^L - D^T)/(BL_b - BT_b)$$

$$k_b = 10 - \{\gamma_p * (\sigma_b * BT_b + D^L - D^T) - D^T\}$$

Dabei sind $\sigma_r$, $\sigma_g$ und $\sigma_b$ die Steigungen der Geraden (19) der in Fig. 2a, 2b und 2c dargestellten Funktionen D' = f (D).

In einem weiteren Schritt [**C5**] erfolgt eine Umfangsanpassung des durch die gewählten Dichtewerte ($D^L$ und $D^T$) definierten normierten Dichtebereiches $\Delta$ D' = $D^L$ - $D^T$) bzw. ($\tau'_L$ - $\tau'_T$) an den durch wählbare Fixwerte ($\tau''_L$ und $\tau''_T$) definierten Signal- oder Aussteuerungsbereich $\Delta$ S = ($\tau''_L$ - $\tau''_T$) eines die Werte weiterverarbeitenden elektronischen Gerätes. Diese Umfangsanpassung läuft nach folgender allgemeinen Gleichung [6] ab:

$$( \tau'' - \tau_T) / (\tau_L - \tau_T) = (\tau' - \tau (D=\gamma_p * (D^L-D^T)+D^T)) / ( \tau (D=D^T) - \tau (D=\gamma_p * (D^L-D^T)+D^T)) \qquad [6]$$

Aus der allgemeinen Gleichung [6] ergeben sich für die Farbanteile "Rot", "Grün" und "Blau" folgende Beziehungen nach Gleichungen [7]:

$$\tau''_r = ( \tau_L - \tau_T) / ( \tau (D=D^T) - \tau (D=\gamma_p * (D^L-D^T)+D^T)) * ( \tau'_r - \tau (D=\gamma_p * (D^L-D^T)+D^T)) + \tau_T$$
$$\tau''_g = ( \tau_L - \tau_T) / ( \tau (D=D^T) - \tau (D=\gamma_p * (D^L-D^T)+D^T)) * ( \tau'_g - \tau (D=\gamma_p * (D^L-D^T)+D^T)) + \tau_T \qquad [7]$$
$$\tau''_b = ( \tau_L - \tau_T) / ( \tau (D=D^T) - \tau (D=\gamma_p * (D^L-D^T)+D^T)) * ( \tau'_b - \tau (D=\gamma_p * (D^L-D^T)+D^T)) + \tau_T$$

Aus der Zusammenfassung der Gleichungen [6] und [7] entsteht die Positiv/-Negativ-Umkehrfunktion der allgemeinen Form $\tau''$ = f ($\tau$). Daraus ergeben sich die entsprechenden Positiv/Negativ-Umkehrfunktionen für die drei Farbanteile "Rot", "Grün" und "Blau" des Farbnegativs (3) getrennt nach Gleichungen [8] wie folgt:

$$\tau''_r = k'_r \cdot \tau_r{}^{-\gamma r'} + \varepsilon'_r$$

$$\tau''_g = k'_g \cdot \tau_g{}^{-\gamma g'} + \varepsilon'_g \qquad [8]$$

$$\tau''_b = k'_b \cdot \tau_b{}^{-\gamma b'} + \varepsilon'_b$$

mit folgenden Abkürzungen für den Farbanteil "Rot" :

$$k'_r = (\tau_L - \tau_T)/(\tau(D=D^T) - \tau(D=\gamma_p * (D^L - D^T) + D^T)) * 10^{-\gamma_p} * (\sigma_r * BT_r + D^L - D^T) - D^T$$

$$\gamma'_r = \sigma_r * \gamma_p$$

$$\varepsilon'_r = \tau_T - (\tau_L - \tau_T)/(\tau(D=D^T) - \tau(D=\gamma_p * (D^L - D^T) + D^T)) * \tau(D=\gamma_p * (D^L - D^T) + D^T)$$

für den Farbanteil "Grün" :

$$k'_g = (\tau_L - \tau_T)/(\tau(D=D^T) - \tau(D=\gamma_p * (D^L - D^T) + D^T)) * 10^{-\gamma_p} * (\sigma_g * BT_g + D^L - D^T) - D^T$$

$$\gamma'_g = \sigma_g * \gamma_p$$

$$\varepsilon'_g = \tau_T - (\tau_L - \tau_T)/(\tau(D=D^T) - \tau(D=\gamma_p * (D^L - D^T) + D^T)) * \tau(D=\gamma_p * (D^L - D^T) + D^T)$$

und für den Farbanteil "Blau" :

$$k'_b = (\tau_L - \tau_T)/(\tau(D=D^T) - \tau(D=\gamma_p * (D^L - D^T) + D^T)) * 10^{-\gamma_p} * (\sigma_b * BT_b + D^L - D^T) - D^T$$

$$Y'_b = \sigma_b * \gamma_p$$

$$\varepsilon'_b = \tau_T - (\tau_L - \tau_T)/(\tau(D=D^T) - \tau(D=\gamma_p * (D^L - D^T) + D^T)) * \tau(D=\gamma_p * (D^L - D^T) + D^T)$$

Falls die Farbwerte ($R_n$, $G_n$, $B_n$) in den Vorverzerrungs-Stufen (8) des Farbabtasters (1) nach Fig. 1 vorverzerrt und die Vorverzerrungen in Schritt [C1] rückgängig gemacht wurden, müssen die Vorverzerrungen wieder in die Gleichnungen [8] wie folgt eingerechnet werden:

$$R_p = f(\tau''_r)$$

$$G_p = f(\tau''_g) \qquad [9]$$

$$B_p = f(\tau''_b)$$

Fanden dagegen keine Vorverzerrungen statt, sind :

$$R_p = \tau''_r$$
$$G_p = \tau''_g \qquad [10]$$
$$B_p = \tau''_b$$

In einem vierten Verfahrensschritt [D] werden zum Abschluß für die im Wertebereich des Farbnegativs (3) liegenden Eingangs-Farbwerte ($R_n$, $G_n$, $B_n$) die funktionsmäßig zugehörigen Ausgangs-Farbwerte ($R_p$, $G_p$, $B_p$) nach der Negativ/Positiv-Umkehrfunktion ($R_p$, $G_p$, $B_p$) = f ($R_n$, $G_n$, $B_n$) berechnet und durch die entsprechenden Eingangs-Farbwerte ($R_n$, $G_n$, $B_n$) adressierbar als Wertetabelle in dem Tabellen-Speicher (16) abgelegt. Der Tabellen-Speicher kann Bestandteil eines Farbabtasters oder eines Bildbearbeitungs-Systems oder dem Farbabtaster nachgeschaltet sein.

Zur Bereitstellung der für die anschließende Bildbearbeitung benötigten Ausgangs-Farbwerte ($R_p$, $G_p$, $B_p$) des zu reproduzierenden Farbnegativs (3) ergeben sich mehrere Möglichkeiten.

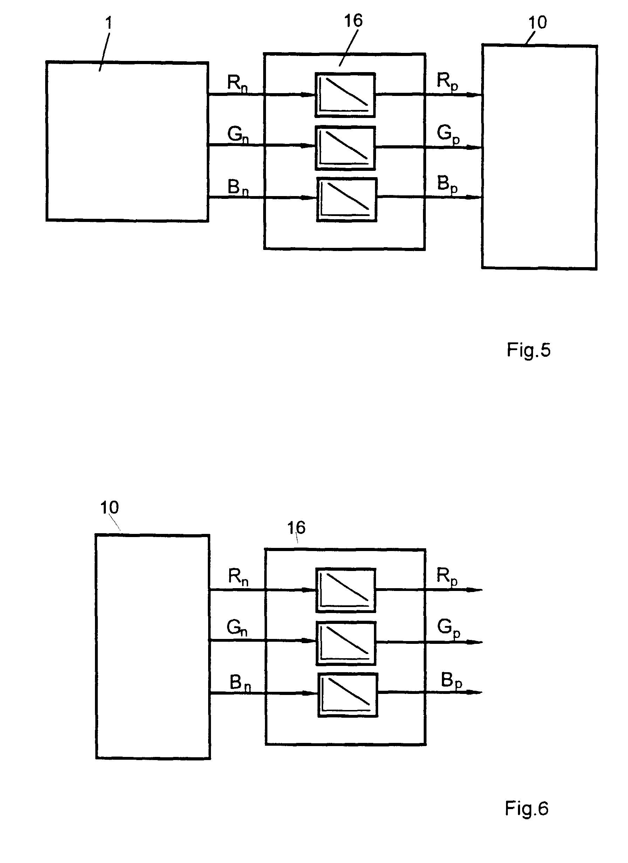

Fig. 5 zeigt ein erstes Ausführungsbeispiel für eine Einrichtung zur Umsetzung der Eingangs-Farbwerte ($R_n$, $G_n$, $B_n$) eines Farbnegativs (3) in die Ausgangs-Farbwerte ($R_p$, $G_p$, $B_p$), bei welcher der gefüllte Tabellen-Speicher (16) dem Farbabtaster (1) nachgeschaltet ist und die Farbwert-Umsetzung on-line bei der Feinscan-Abtastung eines Farbnegativs (3) durchgeführt wird. Die dabei gewonnenen Farbwerte ($R_p$, $G_p$, $B_p$) werden dann einem Bildbearbeitungs-System zur Weiterverarbeitung, beispielsweise zur Durchführung einer Farbkorrektur, und/oder einem Farbmonitor zur farbrichtigen Beurteilung des Farbnegativs (3) zugeführt.

Fig. 6 zeigt ein zweites Ausführungsbeispiel für eine Einrichtung zur Umsetzung der Eingangs-Farbwerte ($R_n$, $G_n$, $B_n$) eines Farbnegativs (3) in die Ausgangs-Farbwerte ($R_p$, $G_p$, $B_p$). Falls in dem Bilddaten-Speicher (10) die durch einen Feinscan erzeugten Farbwerte ($R_n$, $G_n$, $B_n$) abgelegt sind, kann der Tabellen-Speicher (16) auch dem Bilddaten-Speichen (10) nachgeschaltet werden. In diesem Fall werden die in dem Bilddaten-Speicher (10) gespeicherten Eingangs-Farbwerte ($R_n$, $G_n$, $B_n$) in dem Tabellen-Speicher (16) in die Ausgangs-Farbwerte ($R_p$, $G_p$, $B_p$) umgesetzt und diese zur Weiterverarbeitung in einem Bildbearbeitungs-System zugeführt.

**Patentansprüche**

1. Verfahren zur Umwandlung von Farbwerten eines Farbnegativs (3) mittels einer Negativ/Positiv-Umkehrfunktion, **dadurch gekennzeichnet,** daß

- durch punkt- und zeilenweise, optoelektronische Abtastung eines Farbnegativs (3) Transmissionswerte ($\tau_r$, $\tau_g$, $\tau_b$) bzw. Farbwerte ($R_n$, $G_n$, $B_n$) für die drei Farbanteile gewonnen und gespeichert werden,
- aus den Farbwerten ($R_n$, $G_n$, $B_n$) für jeden Farbanteil getrennt der hellste Farbwert, der Bildlichtwert ($BL_r$, $BL_g$, $BL_b$), und der dunkelste Farbwert, der Bildtiefewert ($BT_r$, $BT_g$, $BT_b$), des Farbnegativs (3) festgestellt werden,
- für jeden Farbanteil Dichtebereiche ($\Delta D_r$, $\Delta D_g$, $\Delta D_b$) durch Differenzbildung zwischen den entsprechenden Bildlichtwerten ($BL_r$, $BL_g$, $BL_b$) und den Bildtiefewerten ($BT_r$, $BT_g$, $BT_b$) des Farbnegativs (3) ermittelt werden,
- ein Dichtebereich ($\Delta D'$) durch Differenzbildung zwischen einem vorgegebenen Dichtewert ($D^L$) für Bild licht und einen vorgegebenen Dichtewert ($D^T$) für Bildtiefe definiert wird,
- aus den drei Dichtebereichen ($\Delta D_r$, $\Delta D_g$, $\Delta D_b$) des Farbnegativs (3) und dem definierten Dichtebereich ($\Delta D'$) eine Negativ/Positiv-Umkehrfunktion [$R_p$, $G_p$, $B_p$ = f ($R_n$, $G_n$, $B_n$)] zur Umsetzung der Farbwerte ($R_n$, $G_n$, $B_n$) des Farbnegativs (3) in die Farbwerte ($R_p$, $G_p$, $B_p$) eines entsprechenden farbrichtigen Farbpositivs ermittelt wird,
- für den Wertebereich der Farbwerte ($R_n$, $G_n$, $B_n$) des Farbnegativs (3) die funktionsmäßig zugehörigen Farbwerte ($R_p$, $G_p$, $B_p$) des Farbpositivs anhand der Negativ/Positiv-Umkehrfunktion [$R_p$, $G_p$, $B_p$ = f ($R_n$, $G_n$, $B_n$)] berechnet und durch die entsprechenden Farbwerte ($R_n$, $G_n$, $B_n$) adressierbar in einem Tabellen-Speicher (16) abgelegt werden und
- die Farbwerte ($R_n$, $G_n$, $B_n$) des Farbnegativs (3) mittels des Tabellen-Speichers (16) in die Farbwerte ($R_p$, $G_p$, $B_p$) des entsprechenden Farbpositivs zur Weiterverarbeitung umgesetzt werden.

2. Verfahren nach Anspruch 1, **dadurch gekennzeichnet,** daß zur Ermittlung der Negativ/Positiv-Umkehrfunktion [$R_p$, $G_p$, $B_p$ = f ($R_n$, $G_n$, $B_n$)]

a) die durch Abtastung des Farbnegativs (3) gewonnenen Transmissionswerte ($\tau_r$, $\tau_g$, $\tau_b$) in Dichtewerte ($D_r$, $D_g$, $D_b$) logarithmiert werden,

9

b) die drei Dichtebereiche ($\Delta D_r$, $\Delta D_g$, $\Delta D_b$) des Farbnegativs (3) über lineare Normierungsfunktionen [$D'_r$ = $f_r$ ($D_r$), $D'_g = f_g$ ($D_g$), $D'_b = f_b$ ($D_b$) ] an den definierten Dichtebereich ($\Delta D'$) angepaßt werden, wodurch die drei Farbdichtekurven des Farbnegativmaterials auf eine Farbdichtekurve mit der Steigung ($\gamma_n$) normiert werden,

c) die normierte Farbdichtekurve [$D' = f$ ($D$)] des Farbnegativmaterials in die normierte inverse Farbdichtekurve [$D'' = f$ ($D'$)] eines Positivmaterials mit der Steigung [ $\gamma_p = 1/\gamma_n$] umgewandelt wird,

d) aus den Dichtewerten ($D'_r$, $D'_g$, $D'_b$) die inversen Dichtewerte ($D''_r$, $D''_g$, $D''_b$) anhand der invertierten normierten Farbdichtekurve [$D'' = f$ ($D'$)] entsprechend einer Farbumkehr berechnet werden,

e) die inversen Dichtewerte ($D''_r$, $D''_g$, $D''_b$) in Transmissionswerte ($\tau'_r, \tau'_g, \tau'_b$) entlogarithmiert werden,

f) der definierte Dichtebereich [$\Delta D'$ bzw. ($\tau'_L - \tau'_T$)] an einen durch Fixpunkte ($\tau''_L$, $\tau''_T$) festgelegten Signalbereich [$\Delta S = (\tau''_L - \tau''_T)$] umfangsmäßig angepaßt wird und

g) die Negativ/Positiv-Umkehrfunktion [$\tau''_r, \tau''_g, \tau''_b = f$ ($\tau_r$, $\tau_g$, $\tau_b$)] bzw. [$R_p$, $G_p$, $B_p = f$ ($R_n$, $G_n$, $B_n$)] gebildet wird.

3. Verfahren nach Anspruch 2, **dadurch gekennzeichnet**, daß die Berechnung der Dichtewerte ($D_r$, $D_g$, $D_b$) in Schritt a) nach folgenden Gleichungen abläuft:

$$D_r = -\log \tau_r$$

$$D_g = -\log \tau_g$$

$$D_b = -\log \tau_b$$

4. Verfahren nach Anspruch 2, **dadurch gekennzeichnet,** daß die Ermittlung der Dichtewerte ($D'_r$, $D'_g$, $D'_b$) in Schritt b) nach folgenden Gleichungen abläuft:

$$D'_r = (D^L - D^T)/(BL_r - BT_r) * (D_r - BT_r) + D^T$$

$$D'_g = (D^L - D^T)/(BL_g - BT_g) * (D_g - BT_g) + D^T$$

$$D'_b = (D^L - D^T)/(BL_b - BT_b) * (D_b - BT_b) + D^T$$

5. Verfahren nach Anspruch 2, **dadurch gekennzeichnet,** daß die Ermittlung der Dichtewerte ($D''_r$, $D''_g$, $D''_b$) in Schritt d) nach folgenden Gleichungen abläuft:

$$D''_r = -\gamma_p * (D'_r - D^L) + D^T$$

$$D''_g = -\gamma_p * (D'_g - D^L) + D^T$$

$$D''_b = -\gamma_p * (D'_b - D^L) + D^T$$

6. Verfahren nach Anspruch 2, **dadurch gekennzeichnet,** daß die Entlogarithmierung in Schritt e) nach folgenden Gleichungen abläuft:

$$\tau'_r = 10^{-D''_r}$$

$$\tau'_g = 10^{-D''_g}$$

$$\tau'_b = 10^{-D''_b}$$

**7.** Verfahren nach Anspruch 2, **<u>dadurch gekennzeichnet</u>**, daß die Umfangsanpassung in Schritt f) nach folgenden Gleichungen abläuft:

$$\tau''_r = (\tau_L - \tau_T) / (\tau(D=D^T) - \tau(D=\gamma_p * (D^L-D^T)+D^T)) * (\tau'_r - \tau(D=\gamma_p * (D^L-D^T)+D^T)) + \tau_T$$

$$\tau''_g = (\tau_L - \tau_T) / (\tau(D=D^T) - \tau(D=\gamma_p * (D^L-D^T)+D^T)) * (\tau'_g - \tau(D=\gamma_p * (D^L-D^T)+D^T)) + \tau_T$$

$$\tau''_b = (\tau_L - \tau_T / (\tau(D=D^T) - \tau(D=\gamma_p * (D^L-D^T)+D^T)) * (\tau'_b - \tau(D=\gamma_p * (D^L-D^T)+D^T)) + \tau_T$$

**8.** Verfahren nach Anspruch 2, **<u>dadurch gekennzeichnet</u>**, daß die Negativ/Positiv-Umkehrfunktion $[\tau''_r, \tau''_g, \tau''_b = f(\tau_r, \tau_g, \tau_b)]$ nach Schritt g) folgende Form hat:

$$\tau''_r = k'_r * \tau_r^{-\gamma r'} + \varepsilon'_r$$

$$\tau''_g = k'_g * \tau_g^{-\gamma g'} + \varepsilon'_g$$

$$\tau''_b = k'_b * \tau_b^{-\gamma b'} + \varepsilon'_b$$

**9.** Verfahren nach einem der Ansprüche 1 bis 8, **<u>dadurch gekennzeichnet,</u>** daß die Bildlichtwerte ($BL_r$, $BL_g$, $BL_b$) und die Bildtiefewerte ($BT_r$, $BT_g$, $BT_b$) durch eine automatische Bildanalyse des Farbnegativs (3) ermittelt werden.

**10.** Verfahren nach Anspruch 9, **<u>dadurch gekennzeichnet,</u>** daß für jeden Farbanteil getrennt

- die Häufigkeits-Verteilung $[H(R), H(G)$ bzw. $H(B)]$ der Farbwerte (R, G bzw. B) als Helligkeits-Histogramm ermittelt wird,
- in dem Helligkeits-Histogramm die Grenzen eines möglichen Bildlicht-Bereiches, in dem der Bildlichtwert ($BL_r$, $BL_g$ bzw. $BL_b$) liegen soll, und die Grenzen eines Bildtiefe-Bereiches, in dem der Bildtiefewert ($BT_r$, $BT_g$ bzw. $BT_b$) liegen soll, jeweils durch charakteristische Helligkeitswerte bestimmt werden und
- der-Bildlichtwert ($BL_r$, $BL_g$ bzw. $BL_b$) aus dem Verlauf des Helligkeits-Histogramms innerhalb eines erweiterten Helligkeitsbereiches um den Bildlicht-Bereich und der Bildtiefewert ($BT_r$, $BT_g$ bzw. $BT_b$) aus dem Verlauf des Helligkeits-Histogramms innerhalb eines erweiterten Helligkeitsbereiches um den Bildtiefe-Bereich ermittelt werden.

**11.** Verfahren nach einem der Ansprüche 1 bis 10, **<u>dadurch gekennzeichnet,</u>** daß die Bildanalyse des Farbnegativs (3) anhand von Farbwerten ($R_n, G_n, B_n$) erfolgt, die durch Abtastung des Farbnegativs (3) mit einer gröberen Auflösung gegenüber der für die Reproduktion des Farbnegativs (3) erforderlichen Auflösung gewonnen werden.

**12.** Verfahren nach einem der Ansprüche 1 bis 11, **<u>dadurch gekennzeichnet,</u>** daß

- die bei der Abtastung des Farbnegativs (3) gewonnenen Transmissionswerte ($\tau_r, \tau_g, \tau_b$) nach den Beziehungen $R_n = f(\tau_r)$, $G_n = f(\tau_g)$ und $B_n = f(\tau_b)$ vorverzerrt werden, um die Farbwerte ($R_n, G_n, B_n$) zu erhalten,
- zur Berechnung der Negativ/Positiv-Umkehrfunktion die Vorverzerrungen vor der Logarithmierung der Transmissionswerte ($\tau_r, \tau_g, \tau_b$) nach den Beziehungen $\tau_r = f^{-1}(R_n)$, $\tau_g = f^{-1}(G_n)$ und $\tau_b = f^{-1}(B_n)$ wieder rückgängig gemacht werden und
- die Vorverzerrungen in die berechnete Negativ/Positiv-Umkehrfunktion nach den Beziehungen $R_p = f(\tau''_r)$, $G_p = f(\tau''_g)$ und $B_p = f(\tau''_b)$ wieder eingerechnet werden.

**13.** Verfahren nach einem der Ansprüche 1 bis 12, **<u>dadurch gekennzeichnet,</u>** daß

- das Farbnegativ (3) zur Gewinnung der Farbwerte ($R_n$, $G_n$, $B_n$) für die Bildanalyse zunächst mit einer gröberen Auflösung gegenüber der für die Reproduktion des Farbnegativs (3) erforderlichen Auflösung abgetastet wird,
- die Wertetabelle für den Tabellen Speicher (16) berechnet wird;
- das Farbnegativ (3) mit der für die Reproduktion erforderlichen Auflösung abgetastet wird und
- die bei Abtastung mit der für die Reproduktion erforderlichen Auflösung gewonnenen Farbwerte ($R_n$, $G_n$, $B_n$) anhand der Wertetabelle des Tabellen-Speiches (16) in die Farbwerte ($R_p$, $G_p$, $B_p$) zur Weiterverarbeitung umgesetzt werden.

14. Einrichtung zur Umwandlung von Farbwerten eines Farbnegativs (3) mittels einer Negativ/Positiv-Umkehrfunktion, **<u>gekennzeichnet durch</u>**

- einen optoelektronischen Farbabtaster (1) zur Gewinnung von Farbwerten ($R_n$, $G_n$, $B_n$) für die drei Farbanteile durch punkt- und zeilenweise Abtastung eines Farbnegativs (3),
- einen an den Farbabtaster (1) angeschlossenen Bilddaten-Speicher (10) zur Zwischenspeicherung der Farbwerte ($R_n$, $G_n$, $B_n$),
- eine mit dem Bilddaten-Speicher (10) verbundene Bildanalyse-Einheit (12), um aus den Farbwerten ($R_n$, $G_n$, $B_n$) für jeden Farbanteil getrennt den hellsten Farbwert, den Bildlichtwert ($BL_r$, $BL_g$, $BL_b$), und den dunkelsten Farbwert, den Bildtiefewert ($BT_r$, $BT_g$, $BT_b$), des Farbnegativs (3) festzustellen,
- eine an die Bildanalyse-Einheit (12) angeschlossene Rechen-Stufe (15) zur Ermittlung der Parameter der Negativ/Positiv-Umkehrfunktion [$R_p$, $G_p$, $B_p$ = f ($R_n$, $G_n$, $B_n$)] zur Umsetzung der Farbwerte ($R_n$, $G_n$, $B_n$) des Farbnegativs (3) in die entsprechenden Farbwerte ($R_p$, $G_p$, $B_p$) des entsprechenden farbrichtigen Farbpositivs aus den Bildlichtwerten ($BL_r$, $BL_g$, $BL_b$), den Bildtiefewerten ($BT_r$, $BT_g$, $BT_b$) und vorgebbaren Dichtewerte ($D^L$, $D^T$) für Bild licht und Bildtiefe und zur Berechnung der funktionsmäßig zugehörigen Farbwerte ($R_p$, $G_p$, $B_p$) des Farbpositivs aus den Farbwerten ($R_n$, $G_n$, $B_n$) des Farbnegativs (3) mittels der Negativ/Positiv-Umkehrfunktion [$R_p$, $G_p$, $B_p$ = f ($R_n$, $G_n$, $B_n$)] und
- einen der Rechen-Stufe (15) nachgeschalteten Tabellen-Speicher (16) zur Ablage der berechneten Farbwerte ($R_p$, $G_p$, $B_p$), welcher durch die entsprechenden Farbwerte ($R_n$, $G_n$, $B_n$) adressierbar ist.

15. Einrichtung nach Anspruch 14, **<u>dadurch gekennzeichnet</u>**, daß der Tabellen-Speicher (16) dem Farbabtaster (1) nachschaltbar ist, um die bei der Abtastung des Farbnegativs (3) gewonnenen Farbwerte ($R_n$, $G_n$, $B_n$) mittels der Negativ/Positiv-Umkehrfunktion [$R_p$, $G_p$, $B_p$ = f ($R_n$, $G_n$, $B_n$)] in die Farbwerte ($R_p$, $G_p$, $B_p$) des Farbpositivs umzusetzen.

16. Einrichtung nach Anspruch 14, **<u>dadurch gekennzeichnet,</u>** daß der Tabellen-Speicher (16) dem Bilddaten-Speicher (10) nachschaltbar ist, um die gespeicherten Farbwerte ($R_n$, $G_n$, $B_n$) mittels der Negativ/Positiv-Umkehrfunktion [$R_p$, $G_p$, $B_p$ = f ($R_n$, $G_n$, $B_n$)] in die Farbwerte ($R_p$, $G_p$, $B_p$) des Farbpositivs umzusetzen.

## Claims

1. A method for the conversion of colour values of a colour negative (3) by means of a negative/positive reversal function, <u>characterised in that</u>

- through optoelectronic scanning by point and by line of a colour negative (3), transmission values ($\tau_r$, $\tau_g$, $\tau_b$) or colour values ($R_n$, $G_n$, $B_n$) are obtained and stored for the three colour components,
- from the colour values ($R_n$, $G_n$, $B_n$) for each colour component the brightest colour value, the image light value ($BL_r$, $BL_g$, $BL_b$), and the darkest colour value, the image depth value ($BT_r$, $BT_g$, $BT_b$), of the colour negative (3) are established separately,
- for each colour component, density ranges ($\Delta D_r$, $\Delta D_g$, $\Delta D_b$) are determined by difference formation between the corresponding image light values ($BL_r$, $BL_g$, $BL_b$) and the image depth values ($BT_r$, $BT_g$, $BT_b$) of the colour negative (3),
- a density range ($\Delta D'$) is defined by difference formation between a given density value ($D^L$) for image light and a given density value ($D^T$) for image depth,
- from the three density ranges ($\Delta D_r$, $\Delta D_g$, $\Delta D_b$) of the colour negative (3) and the defined density range ($\Delta D'$) a negative/positive reversal function [$R_p$, $G_p$, $B_p$ = f($R_n$, $G_n$, $B_n$)] is determined for conversion of the colour values ($R_n$, $G_n$, $B_n$) of the colour negative (3) into the colour values ($R_p$, $G_p$, $B_p$) of a corresponding orthochromatic colour positive,
- for the values range of the colour values ($R_n$, $G_n$, $B_n$) of the colour negative (3), the associated colour values in terms of function $(R_p, G_p, B_p)$ of the colour positive are calculated with the aid of the negative/positive reversal function $[R_p, G_p, B_p = f(R_n, G_n, B_n)]$ and are deposited in a table memory (16) so as to be addressable by the corresponding colour values $(R_n, G_n, B_n)$ and

- the colour values $(R_n, G_n, B_n)$ of the colour negative (3) are converted by means of the table memory (16) into the colour values $(R_p, G_p, B_p)$ of the corresponding colour positive for further processing.

2. A method according to Claim 1, <u>characterised in that</u> to determine the negative/postive reversal function $[R_p, G_p, B_p = f(R_n, G_n, B_n)]$

a) the transmission values $(\tau_r, \tau_g, \tau_b)$ obtained by scanning the colour negative (3) are logarithmated into density values $(D_r, D_g, D_b)$,

b) the three density values $(\Delta D_r, \Delta D_g, \Delta D_b)$ of the colour negative (3) are adapted via linear standardization functions $[D'_r = f_r(D_r), D'_g = f_g(D_g), D_b = f_b(D_b)]$ to the defined density range $(\Delta D)$, whereby the three colour density curves of the colour negative material are standardized to a colour density curve with the gradient $(\gamma_n)$,

c) the standardized colour density curve $[D = f(D)]$ of the colour negative material is converted into the standardized inverse colour density curve $[D'' = f(D)]$ of a positive material with the gradient $[\gamma_p = 1/\gamma_n]$,

d) from the density values $(D'_r, D'_g, D'_b)$ the inverse density values $(D''_r, D''_g, D''_b)$ are calculated with the aid of the inverted standardized colour density values $[D'' = f(D')]$ in accordance with a colour reversal,

e) the inverse density values $(D''_r, D''_g, D''_b)$ are antilogarithmated into transmission values $(\tau'_r, \tau'_g, \tau'_b)$,

f) the defined density range $[\Delta D'$ or $(\tau'_L - \tau'_r)]$ is adapted in terms of extent to a signal range $[\Delta S = (\tau''_L - \tau''_T)]$ established by fixed points $[\tau''_L, \tau''_T)$ and

g) the negative/positive reversal function $[\tau''_r, \tau''_g, \tau''_b)] = f[\tau_r, \tau_g, \tau_b)]$ or $[R_p, G_p, B_p = f(R_n, G_n, B_n)]$ is formed.

3. A method according to Claim 2, <u>characterised in that</u> the calculation of the density values $(D_r, D_g, D_b)$ in step a) runs according to the following equations:

$$D_r = -\log \tau_r$$

$$D_g = -\log \tau_g$$

$$D_b = -\log \tau_b$$

4. A method according to Claim 2, <u>characterised in that</u> the determining of the density values $(D'_r, D'_g, D'_b)$ in step b) runs according to the following equations:

$$D'_r = (D^L - D^T)/(BL_r - BT_r) * (D_r - BT_r) + D^T$$

$$D'_g = (D^L - D^T)/BL_g - BT_g) * (D_g - BT_g) + D^T$$

$$D'_b = (D^L - D^T)/(BL_b - BT_b) * (D_b - BT_b) + D^T$$

5. A method according to Claim 2, <u>characterised in that</u> the determining of the density values $(D''_r, D''_g, D''_b)$ in step d) runs according to the following equations:

$$D''_r = -\gamma_p * (D'_r - D^L) + D^T$$

$$D''_g = -\gamma_p * (D'_g - D^L) + D^T$$

$$D''_b = -\gamma_p * (D_b - D^L) + D^T$$

6. A method according to Claim 2, <u>characterised in that</u> the antilogarithmation in step e) runs according to the following equations:

$$\tau'_r = 10^{-D''_r}$$

$$\tau'_g = 10^{-D''_g}$$

$$\tau'_b = 10^{-D''_b}$$

7. A method according to Claim 2, <u>characterised in that</u> the extent adaptation in step f) runs according to the following equations:

$$\tau''_r=(\tau_L-\tau_r)/(\tau(\ D=D^T)-\tau(D=\gamma_p*(D^L-D^T)+D^T))*(\tau'_r-\tau(D=\gamma_p*(D^L-D^T)+D^T))+\tau_T$$

$$\tau''_g=(\tau_L-\tau_r)/(\tau(D=D^T)-\tau(D=\gamma_p*(D^L-D^T)+D^T))*(\tau'_g-\tau(D=\gamma_p*(D^L-D^T)+D^T))+\tau_T$$

$$\tau''_b=(\tau_L-\tau_r)/(\tau(D=D^T)-\tau(D=\gamma_p*(D^L-D^T)+D^T))*(\tau'_b-\tau(D=\gamma_p*(D^L-D^T)+D^T))+\tau_T$$

8. A method according to Claim 2, <u>characterised in that</u> the negative/positive reversal function $[\tau''_r, \tau''_g, \tau''_b = f\ (\tau_r, \tau_g, \tau_b)]$ according to step g) has the following form:

$$\tau''_r = k'_r * \tau_r^{-\gamma r'} + \varepsilon'_r$$

$$\tau''_g = k'_g * \tau_g^{-\gamma g'} + \varepsilon'_g$$

$$\tau''_b = k'_b * \tau_b^{-\gamma b'} + \varepsilon'_b$$

9. A method according to any of Claims 1 to 8, <u>characterised in that</u> the image light values ($BL_r$, $BL_g$, $BL_b$) and the image depth values ($BT_r$, $BT_g$, $BT_b$) are determined by an automatic image analysis of the colour negative (3).

10. A method according to Claim 9, <u>characterised in that</u> for each colour component separately

- the frequency distribution [H(R), H(G) or H(B)] of the colour values (R, G or B) is determined as brightness histogram,
- in the brightness histogram the limits of a possible image light range, in which the image light value ($BL_r$, $BL_g$ or $BL_b$) is to lie, and the limits of an image depth range, in which the image depth value ($BT_r$, $BT_g$ or $BT_b$) is to lie, are determined respectively by characteristic brightness values and
- the image light value ($BL_r$, $BL_g$ or $BL_b$) is determined from the course of the brightness histogram within an expanded brightness range by the image light range and the image depth value ($BT_r$, $BT_g$ or $BT_b$) is determined from the course of the brightness histogram within an expanded brightness range by the image depth range.

11. A method according to any of Claims 1 to 10, <u>characterised in that</u> the image analysis of the colour negative (3) takes place by means of colour values ($R_n$, $G_n$, $B_n$), which are obtained by scanning the colour negative (3) with a coarser resolution (coarse scan) compared with the resolution necessary for the reproduction of the colour negative (3) (fine scan).

12. A method according to any of Claims 1 to 11, <u>characterised in that</u> the transmission values ($\tau_r$, $\tau_g$, $\tau_b$) obtained in the scanning of the colour negative (3) are pre-distorted according to the relationships $R_n=f(\tau_r)$, $G_n=f(\tau_g)$ and $B_n=F(\tau_b)$, in order to obtain the colour values ($R_n$, $G_n$, $B_n$),

- to calculate the negative/positive reversal function, the pre-distortions are cancelled again before the logarithmating of the transmission values ($\tau_r$, $\tau_g$, $\tau_b$) according to the relationships $\tau_r = f^1(R_n)$, $\tau_g = f^1(G_n)$ and $\tau_b = f^1(B_n)$ and
- the pre-distortions are calculated again into the calculated negative/positive reversal function according to the relationships $R_p = f(\tau''_r)$, $G_p = f(\tau''_g)$ and $B_p = f(\tau''_b)$.

**13.** A method according to any of Claims 1 to 12, <u>characterised in that</u>

- to obtain the colour values ($R_n$, $G_n$, $B_n$) for the image analysis, the colour negative (3) is firstly scanned with a coarser resolution (coarse scan) compared with the resolution necessary for the reproduction of the colour negative (3) (fine scan),
- the table of values is calculated for the table memory (16);
- the colour negative (3) is scanned with the resolution necessary for reproduction (fine scan) and
- the colour values ($R_n$, $G_n$, $B_n$) obtained on the fine scan are converted by means of the table of values (16) into the colour values ($R_p$, $G_p$, $B_p$) for further processing.

**14.** An arrangement for the conversion of colour values of a colour negative (3) by means of a negative/positive reversal function, <u>characterised by</u>

- an optoelectronic colour scanner (1) to obtain colour values ($R_n$, $G_n$, $B_n$) for the three colour components by the scanning by point and by line of a colour negative (3),
- an image data memory (10) connected to the colour scanner (1) for the intermediate storage of the colour values ($R_n$, $G_n$, $B_n$),
- an image analysis unit (12) connected with the image data memory (10), in order to establish from the colour values ($R_n$, $G_n$, $B_n$) for each colour component separately the brightest colour value, the image light value ($BL_r$, $BL_g$, $BL_b$), and the darkest colour value, the image depth value ($BT_r$, $BT_g$, $BT_b$) of the colour negative (3),
- a calculation stage (15), connected to the image analysis unit (12), to determine the parameters of the negative/positive reversal function [$R_p$, $G_p$, $B_p = f(R_n, G_n, B_n)$] for conversion of the colour values ($R_n$, $G_n$, $B_n$) of the colour negative (3) into the corresponding colour values ($R_p$, $G_p$, $B_p$) of the corresponding orthochromic colour positive from the image light values ($BL_r$, $BL_g$, $BL_b$), the image depth values ($BT_r$, $BT_g$, $BT_b$) and specifiable density values ($D^L$, $D^T$) for image light and image depth and to calculate the associated colour values ($R_p$, $G_p$, $B_p$) in terms of function of the colour positive from the colour values ($R_n$, $G_n$, $B_n$) of the colour negative (3) by means of the negative/positive reversal function [$R_p$, $G_p$, $B_p = f(R_n, G_n, B_n)$] and
- a table memory (16) arranged after the calculation stage (15) for depositing the calculated colour values ($R_p$, $G_p$, $B_p$), which is addressable by the corresponding colour values ($R_n$, $G_n$, $B_n$).

**15.** An arrangement according to Claim 14, <u>characterised in that</u> the table memory (16) is able to be arranged after the colour scanner (1), in order to convert the colour values ($R_n$, $G_n$, $B_n$) obtained in the scanning of the colour negative (3) by means of the negative/positive reversal function [$R_p$, $G_p$, $B_p = f(R_n, G_n, B_n)$] into the colour values ($R_p$, $G_p$, $B_p$) of the colour positive.

**16.** An arrangement according to Claim 14, <u>characterised in that</u> the table memory (16) is able to be arranged after the image data memory (10), in order to convert the stored colour values ($R_n$, $G_n$, $B_n$) by means of the negative/positive reversal function [$R_p$, $G_p$, $B_p = f(R_n, G_n, B_n)$] into the colour values ($R_p$, $G_p$, $B_p$) of the colour positive.

**Revendications**

**1.** Procédé de conversion des valeurs chromatiques d'un négatif couleur (3) par une fonction d'inversion négatif/positif,

caractérisé en ce que

par une détection optoélectronique, point par point, et ligne par ligne, d'un négatif couleur (3), on détermine les coefficients de transmission ($\tau_r$, $\tau_g$, $\tau_b$) ou les valeurs chromatiques ($R_n$, $G_n$, $B_n$) pour les trois composantes de couleurs et on mémorise

- à partir des valeurs chromatiques ($R_n$, $G_n$, $B_n$) on détermine, séparément pour chaque composante de couleur, la valeur chromatique la plus claire, l'indice de lumination de l'image ($BL_r$, $BL_g$, $BL_b$) et la valeur chromatique la plus sombre, l'indice de ton foncé de l'image ($BT_r$, $BT_g$, $BT_b$) du négatif couleur (3),
- pour chaque composante de couleur on détermine des plages de densités ($\Delta D_r$, $\Delta D_g$, $\Delta D_b$) en faisant la différence entre les indices de lumination d'images correspondants ($BL_r$, $BL_g$, $BL_b$) et les indices ton foncé ($BT_r$, $BT_g$, $BT_b$) du négatif couleur (3),

- on définit une plage de densité ($\Delta$ D') en formant la différence entre une valeur de densité ($D^L$) prédéterminée pour l'indice de lumination de l'image et une valeur de densité prédéterminée ($D^T$) pour le ton foncé,

- à partir des trois plages de densité ($\Delta$ $D_r$, $\Delta$ $D_g$, $\Delta$ $D_b$) du négatif couleur (3) et de la plage de densités déterminées ($\Delta$ D') on détermine une fonction d'inversion positif/négatif [$R_p$, $G_p$, $B_b$ = f($R_n$, $G_n$, $B_n$)] pour convertir les valeurs chromatiques ($R_n$, $G_n$, $B_n$) du négatif couleur (3) en valeurs chromatiques ($R_p$, $G_g$, $B_p$) d'un positif couleur de chromaticité correspondante,

- pour la plage des valeurs chromatiques ($R_n$, $G_n$, $B_n$) du négatif couleur (3) on calcule les valeurs chromatiques correspondant fonctionnellement ($R_p$, $G_g$, $B_p$) du positif couleur à l'aide de la fonction d'inversion négatif/positif [$R_p$, $G_p$, $B_b$ = f($R_n$, $G_n$, $B_n$)] et par les valeurs chromatiques correspondantes ($R_n$, $G_n$, $B_n$) on enregistre ces valeurs dans un tableau de mémoire (16) sous une adresse et

- on convertit les valeurs chromatiques ($R_n$, $G_n$, $B_n$) du négatif couleur (3) à l'aide du tableau de la mémoire (16) en des valeurs chromatiques ($R_p$, $G_g$, $B_p$) du positif couleur correspondant pour la suite du traitement.

**2.** Procédé selon la revendication 1,
caractérisé en ce que
pour déterminer la fonction de conversion négatif/positif [$R_p$, $G_p$, $B_b$ = f($R_n$, $G_n$, $B_n$)]

a) on effectue une transformation logarithmique des coefficients de transmission ($\tau_r$, $\tau_g$, $\tau_b$) obtenus par détection du négatif couleur (3) en valeurs de densité ($D_r$, $D_g$, $D_b$),
b) on adapte les trois plages de densité ($\Delta$ $D_r$, $\Delta$ $D_g$, $\Delta$ $D_b$) du négatif couleur (3) par des fonctions de normalisation linéaire [$D'_r$ = $f_r(D_r)$, $D'_g$ = $f_g(D_g)$, $D'_b$ = $f_b$ ($D_b$)], à la plage de densité déterminée ($\Delta$D'), pour normaliser les trois courbes de densité de couleur du support du négatif couleur sur la courbe de densités de couleurs suivant la pente ($\gamma$n),
c) on convertit la courbe de densité de couleur normalisées [D' = f (D)] du négatif couleur en une courbe de densité de couleur inverse normalisée [D" = f (D')] d'un support positif avec une pente [$\gamma$p = 1/$\gamma$n],
d) à partir des valeurs de densités ($D'_r$, $D'_g$, $D'_b$) on calcule les valeurs de densités inversées ($D"_r$, $D"_g$, $D"_b$) à partir de la courbe de densité de couleur normalisée inversées [D" = f(D')] en calculant une inversion de couleur,
e) on effectue la conversion logarithmique inverse des valeurs de densité inverse ($D"_r$, $D"_g$, $D"_b$) en coefficients de transmission ($\tau'_r$, $\tau'_g$, $\tau'_b$),
f) on adapte en périphérie la plage de densité déterminée [$\Delta$ D' ($\tau'_L$ - $\tau'_T$)], à une plage de signal [$\Delta$S = ($\tau"_L$, $\tau"_T$)], déterminée par un point fixe ($\tau"_L$, $\tau"_T$), et
g) on forme la fonction d'inversion négatif/positif [$\tau"_r$, $\tau"_g$, $\tau"_b$ = f($\tau_r$, $\tau_g$, $\tau_b$)] ou [$R_p$, $G_p$, $B_b$ = f($R_n$, $G_n$, $B_n$)].

**3.** Procédé selon la revendication 2,
caractérisé en ce que
le calcul des valeurs de densités ($D_r$, $D_g$, $D_b$) selon l'étape a) se fait avec les équations suivantes :

$$D_r = - \log \tau_r$$

$$D_g = - \log \tau_g$$

$$D_b = - \log \tau_b$$

**4.** Procédé selon la revendication 2,
caractérisé en ce qu'
on détermine des valeurs des densités ($D'_r$, $D'_g$, $D'_b$) dans l'étape b) selon les équations suivantes :

$$D'_r = (D^L - D^T)/(BL_r - BT_r) * (D_r - BT_r) + D^T$$

$$D'_g = (D^L - D^T)/(BL_g - BT_g) * (D_g - BT_g) + D^T$$

$$D'_b = (D^L - D^T)/(BL_b - BT_b) * (D_b - BT_b) + D^T$$

5.  Procédé selon la revendication 2,
    caractérisé en ce qu'
    on détermine les valeurs de densité ($D''_r$, $D''_g$, $D''_b$) selon l'étape d) avec les équations suivantes :

$$D''_r = - \gamma_p * (D'_r - D^L) + D^T$$

$$D''_g = -\gamma_p * (D'_g - D^L) + D^T$$

$$D''_b = - \gamma_p * (D'_b - D^L) + D^T$$

6.  Procédé selon la revendication 2,
    caractérisé en ce qu'
    on effectue la conversion logarithmique inverse selon l'étape e) avec les équations suivantes :

$$\tau'_r = 10^{-D''_r}$$

$$\tau'_g = 10^{-D''_g}$$

$$\tau'_b = 10^{-D''_b}$$

7.  Procédé selon la revendication 2,
    caractérisé en ce que
    l'adaptation périphérique de l'étape f) se fait selon les équations suivantes :

$$\tau''_r = ( \tau_L - \tau_T) / ( \tau (D=D^T) - \tau (D=\gamma_p * (D^L-D^T)+D^T)) * ( \tau'_r - \tau (D=\gamma_p * (D^L-D^T)+D^T)) + \tau_T$$

$$\tau''_g = ( \tau_L - \tau_T) / ( \tau (D=D^T) - \tau (D=\gamma_p * (D^L-D^T)+D^T)) * ( \tau'_g - \tau (D=\gamma_p * (D^L-D^T)+D^T)) + \tau_T$$

$$\tau''_b = ( \tau_L - \tau_T / ( \tau (D=D^T) - \tau (D=\gamma_p * (D^L-D^T)+D^T)) * ( \tau'_b - \tau (D=\gamma_p * (D^L-D^T)+D^T)) + \tau_T$$

8.  Procédé selon la revendication 2,
    caractérisé en ce que
    la fonction d'inversion négatif/positif [$\tau''_r$, $\tau''_g$, $\tau''_b = f(\tau_r, \tau_g, \tau_b)$] selon l'étape g) à la forme suivante :

$$\tau''_r = k'_r * \tau_r^{-\gamma r'} + \varepsilon'_r$$

$$\tau''_g = k'_g * \tau_g^{-\gamma g'} + \varepsilon'_g$$

$$\tau''_b = k'_b * \tau_b^{-\gamma b'} + \varepsilon'_b$$

9.  Procédé selon l'une des revendications 1 à 8,

caractérisé en ce qu'
on détermine les indices de lumination d'image ($BL_r$, $BL_g$, $BL_b$) et les indices de ton foncé d'image ($BT_r$, $BT_g$, $BT_b$) par une analyse d'image automatique du négatif couleur (3).

**10.** Procédé selon la revendication 9,
caractérisé en ce que
séparément pour chaque composante de couleur :

- on détermine la répartition de fréquence [H(R), H(G) H(B)] des valeurs chromatiques (R, G B) comme histogramme de luminosité,
- on détermine, dans l'histogramme de luminosité, les limites d'une plage d'indices de lumination d'image possibles dans laquelle doit se trouver l'indice de la luminosité d'image ($BL_r$, $BL_g$, $BL_b$) et les limites d'une plage d'indice de ton foncé d'image dans laquelle doit se trouver l'indice de ton foncé ($BT_r$, $BT_g$, $BT_b$), chaque fois en la définissant par des valeurs de luminosité caractéristiques et
- on détermine les indices de lumination d'image ($BL_r$, $BL_g$, $BL_b$) à partir du tracé de l'histogramme de luminosité à l'intérieur d'une plage de luminosité étendue autour de la plage de l'indice de lumination de l'image et l'indice de ton foncé d'image ($BT_r$, $BT_g$, $BT_b$) à partir du tracé de l'histogramme de luminosité à l'intérieur d'une plage de luminosité étendue autour de la plage de ton foncé d'image.

**11.** Procédé selon l'une des revendications 1 à 10,
caractérisé en ce qu'
on effectue l'analyse d'image du négatif couleur (3) à l'aide des valeurs chromatiques ($R_n$, $G_n$, $B_n$) que l'on obtient par détection du négatif couleur (3) avec une résolution plus grossière (balayage grossier) par rapport à la résolution nécessaire (balayage fin) pour la reproduction du négatif couleur (3).

**12.** Procédé selon l'une des revendications 1 à 11,
caractérisé en ce qu'

- on transforme les coefficients de transmission ($\tau_r$, $\tau_g$, $\tau_b$) obtenus par la détection du négatif couleur (3) selon les relations $R_n = f(\tau_r)$, $G_n = f(\tau_g)$ $B_n = f(\tau_b)$, pour obtenir les valeurs chromatiques ($R_n$, $G_n$, $B_n$),
- pour calculer la fonction d'inversion négatif/positif on annule les prédistorsions avant la transformation logarithmique des coefficients de transmission ($\tau_r$, $\tau_g$, $\tau_b$) selon les relations $\tau_r = f^1(R_n)$, $\tau_g = f^1(G_n)$ $\tau_b = f^1(B_n)$ et
- on intègre de nouveau par calcul les prédistorsions dans la fonction d'inversion négatif/positif, calculée selon les relations $R_p = f(\tau''_r)$, $G_g = f(\tau''_g)$ $B_b = f(\tau''_b)$.

**13.** °)Procédé selon l'une des revendications 1 à 12,
caractérisé en ce qu'

- on détecte le négatif couleur (3) pour obtenir les valeurs chromatiques ($R_n$, $G_n$, $B_n$) pour l'analyse d'image tout d'abord avec une résolution grossière (balayage grossier) par rapport à la résolution (balayage fin) nécessaire à la reproduction du négatif couleur (3),
- on calcule le tableau des valeurs pour le tableau de la mémoire (16),
- on détecte le négatif couleur (3) avec une résolution (balayage fin) nécessaire à la reproduction et
- on convertit les valeurs de couleur ($R_n$, $G_n$, $B_n$) obtenues lors du balayage fin à l'aide du tableau des valeurs de la mémoire de tableau (16) en des valeurs de détection ($R_p$, $G_p$, $B_p$) pour la suite du traitement.

**14.** Installation pour convertir des valeurs chromatiques d'un négatif couleur (3) par une fonction de conversion négatif/positif,
caractérisée par

- un détecteur de couleur optoélectronique (1) pour obtenir les valeurs chromatiques ($R_n$, $G_n$, $B_n$) des trois composantes de couleur par une détection point par point et ligne par ligne d'un négatif couleur (3),
- une mémoire de données d'images (10) reliée au détecteur de couleur (1) pour stocker de manière intermédiaire les valeurs chromatiques ($R_n$, $G_n$, $B_n$),
- une unité d'analyse d'image (12) reliée à la mémoire de données d'images (10) pour déterminer, à partir des valeurs chromatiques ($R_n$, $G_n$, $B_n$), pour chaque composante de couleur, séparément, la valeur chromatique la plus claire, l'indice de lumination d'image ($BL_r$, $BL_g$, $BL_b$) et la valeur chromatique la plus sombre, l'indice de ton foncé d'image ($BT_r$, $BT_g$, $BT_b$) du négatif couleur (3),

- une unité d'analyse d'image (12) reliée à l'étage de calcul (15) pour déterminer les paramètres de la fonction d'inversion négatif/positif $[R_p, G_p, B_p = f(R_n, G_n, B_n)]$ pour convertir les valeurs chromatiques $(R_n, G_n, B_n)$ du négatif couleur (3) en des valeurs chromatiques correspondantes $(R_p, G_p, B_p)$ du positif couleur de couleur correcte correspondante à partir des indices de lumination d'image $(BL_r, BL_g, BL_b)$, les indices de ton foncé d'image $(BT_r, BT_g, BT_b)$ et les valeurs de densité prédéterminées $(D^L, D^T)$ pour la lumination de l'image et le ton foncé de l'image et pour calculer les valeurs chromatiques $(R_p, G_p, B_p)$ correspondantes fonctionnellement du positif couleur à partir des valeurs chromatiques $(R_n, G_n, B_n)$ du négatif couleur (3) par la fonction d'inversion négatif/positif $[R_p, G_p, B_p = f(R_n, G_n, B_n)]$ et
- une mémoire de tableau (16) en aval de l'étage de calcul (15) pour recevoir les valeurs chromatiques calculées $(R_p, G_p, B_P)$, valeurs qui peuvent être adressées par les valeurs chromatiques correspondantes $(R_n, G_n, B_n)$.

15. Installation selon la revendication 14,
caractérisée en ce que
la mémoire de tableau (16) est en aval du détecteur de couleur (1) pour convertir les valeurs chromatiques $(R_n, G_n, B_n)$ obtenues par la détection du négatif couleur (3) à l'aide de la fonction d'inversion négatif/positif $[R_p, G_P, B_p = f(R_n, G_n, B_n)]$ en des valeurs chromatiques $(R_P, G_p, B_P)$ du positif couleur.

16. Installation selon la revendication 14,
caractérisée en ce que
la mémoire de tableau (16) est en aval de la mémoire de données d'images (10) pour convertir les valeurs chromatiques mises en mémoire $(R_n, G_n, B_n)$ par une fonction d'inversion négatif/positif $[R_p, G_p, B_p = f(R_n, G_n, B_n)]$, en valeurs chromatiques $(R_p, G_p, B_p)$ du positif couleur.

Fig.1

Fig.2a

Fig.2b

Fig.2c

Fig.3

Fig.4

Fig.5

Fig.6